# EUROPEAN PATENT APPLICATION

(11) **EP 0 872 409 A1**
(43) Date of publication of application: **21.10.1998**
(21) Application number: 98830224.6
(22) Date of filing: 14.04.1998
(51) Int. Cl.: B62D 55/084

(54) **Tracked truck with variable track-gauge**

(30) Priority: 17.04.1997 IT MC970035
(71) Applicant: Mait - S.p.A., 60027 Osimo (AN) (IT)
(72) Inventor: Siniscalchi, Sandro, Osimo (AN) (IT)
(74) Representative: Baldi, Claudio

(57) **Abstract**

Tracked truck with variable track gauge of the type consisting of a central body (1) from whose sides two opposing pairs of identical transverse arms (2) having horizontal axis project; said arms being fitted and sliding in respective through holes on the supporting longitudinal members (3) of the tracks (4); each of the arms (2) consisting of two sections of which the end section (2a) is fixed to the other section by means of a pivoting pin (5) having vertical axis, which permits the end section (2a) to assume an orthogonal position with respect to the main section, namely that projecting from the side of the truck.

## Description

This patent application concerns a tracked truck with variable gauge which is ideal for carrying and moving earth moving machines such as drilling machines and diggers, on building yards.

It is common practice to mount these machines on tracked trucks in order to ensure stability during operation as well as to facilitate moving the machine on any type of terrain, even very irregular and muddy terrain.

In order to ensure maximum stability to the drilling machine, the gauge of these tracked trucks must be very wide and this often creates problems because of their excessive dimensions during the road transport of the trucks loaded on the special vehicles by means of which they are generally transferred from one yard to another.

In order to resolve this problem tracked trucks with variable gauge have already been designed and constructed in order to reduce the transverse dimensions of the truck when necessary.

In the case of these tracked truck models with variable gauge, the supporting longitudinal members of each of the two tracks is fitted and slides in an adjacent pair of sturdy horizontal arms projecting from the side of the central body of the truck so that the track may be moved, by means of special actuators, in an orthogonal direction with respect to the longitudinal axis of the truck, thanks to the guide and support provided by this pair of transverse arms.

This means that two transverse through holes must be realised on each longitudinal member in which said arms are housed and slide.

It is obvious that when the two tracks are drawn apart to the maximum distance, the end section of each arm moves to the external mouth of the above through holes but when the tracks are drawn together, a length of the arm equal to the backward stroke of each track projects from said holes.

This means that although the centre to centre distance between the two tracks can be reduced when necessary, the maximum transverse overall dimensions of the truck remain unvaried, and equal to the distance between the end sections of the pair of left hand arms and the corresponding end sections of the pair of right hand arms.

The possibility of reducing the centre to centre distance of the tracks has therefore not resolved the problem, and in fact some producers have already proposed and realised an improvement for these tracked trucks with variable gauge which permits reducing, when necessary, the length of the arms on which the supporting longitudinal members of the tracks slide.

This decisive modification consists of realising each of the above arms in two sections each screwed to the extension of the other so that the end section can be dismounted once the track is in its maximum backward position along the main section, namely that fixed directly to the side of the central body of the truck.

If on one hand the idea of realising each arm in two detachable sections undoubtedly resolves the problem in question, on the other it involves lengthy and difficult mounting and dismounting operations thus making this solution highly unpractical.

The purpose of this invention is to realise a tracked truck with variable gauge of the above type, in which the length of the two pairs of transverse supporting arms for the tracks can be reduced quickly and easily.

This scope has been attained by realising each of these arms in two sections, of which the end section is hinged to the main section by means of a pivoting pin having vertical axis.

Thanks to this feature, once the track has been moved back until the pivoting pin projects out of the supporting longitudinal member, the operator can with very little effort rotate the end section by hand making the same oscillate 90° until it touches the external face of the longitudinal member.

When the longitudinal members are later drawn apart to increase the gauge of the tracks it is not even necessary for the operator to tip the end section backwards in order to align it with the main section.

When the longitudinal member moves forward along the main section it tips the end section backward and once the same is aligned to the main section, it is expropriated from the holes on the longitudinal member, in which the pivoting pin between the two sections is housed.

For major clarity the description according to the invention continues with reference to the enclosed tables which are intended for purposes of illustration and not in a limiting sense whereby:

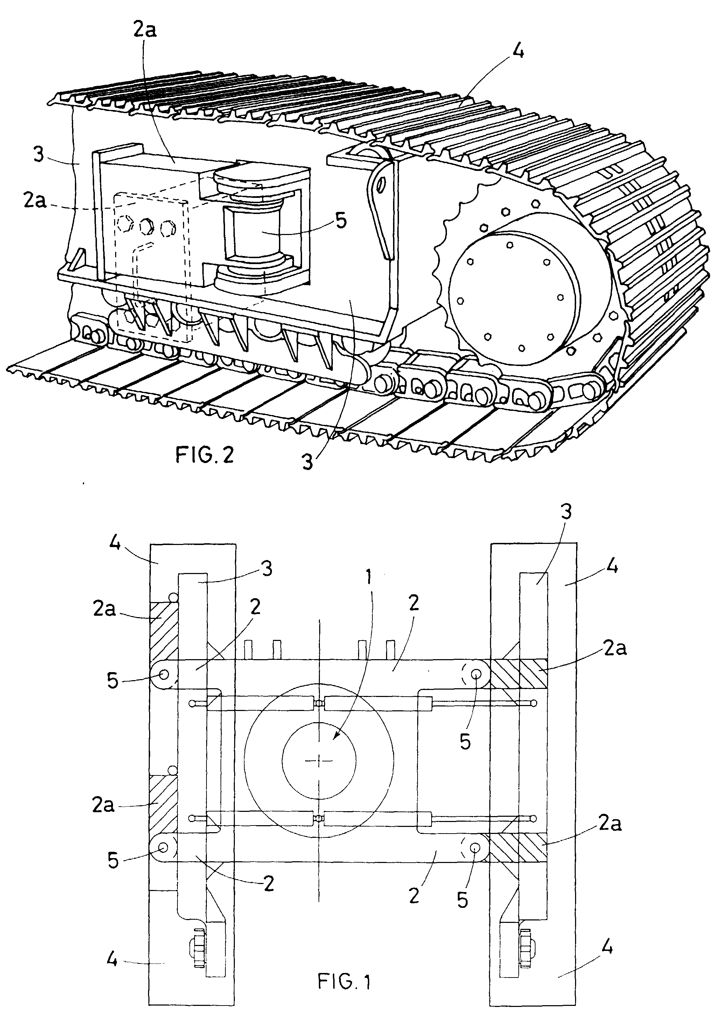

- fig. 1 is a view of the truck according to the invention with one of its tracks (the left hand track) in maximum backward position and the other track in maximum forward position.
- fig. 2 is an axonometric view of the end section of one of the above four arms, rotated and abutted against the external face of the supporting longitudinal member of the track, in maximum backward position.

With reference to the above figures, the tracked truck with variable gauge according to the invention is of the type consisting of a central body (1) from whose sides two opposing pairs of identical transverse arms (2) having horizontal axis project; said arms being fitted and sliding in respective through holes realised on the supporting longitudinal members (3) of the tracks (4).

The truck in question is fitted with conventional actuators for moving the longitudinal members (3) forwards and backwards along the respective supporting and guiding arm (2).

The truck in question is characterised by arms (2) realised by two sections, the end section (2a) of which is fixed to the other by means of a pivoting pin (5) having vertical axis which permits said end section (2a) to assume an orthogonal position to the main section, namely that projecting from the side of the central body (1) of the truck.

## Claims

1. A tracked truck with variable gauge of the type consisting of a central body (1) from whose sides two opposing pairs of transverse arms (2) having horizontal axis, project; said arms being fitted and sliding in respective through holes realised on the supporting longitudinal members (3) of the tracks (4) characterised in that each of the arms (2) is realised in two sections, of which the end section (2a) is fixed to the other by means of a pivoting pin (5) having vertical axis, which allows this end section (2a) to assume an orthogonal position to the main section, namely that projecting from the side of the central body (1) of the truck.
